# EUROPEAN PATENT SPECIFICATION

(11) **EP 2 545 266 B1**
(45) Date of publication and mention of the grant of the patent: **18.12.2019**
(21) Application number: 11753694.6
(22) Date of filing: 11.03.2011
(51) Int. Cl.: F02C 3/28, F02C 3/30, F02C 7/16

(54) **GAS TURBINE POWER GENERATION PLANT AND METHOD FOR OPERATING SUCH A PLANT**
GASTURBINENKRAFTWERK ZUR STROMERZEUGUNG UND VERFAHREN ZUM BETRIEB DES KRAFTWERKS
CENTRALE ÉLECTRIQUE À TURBINE À GAZ ET PROCÉDÉ DE FONCTIONNEMENT D'UNE TELLE CENTRALE

(30) Priority: 11.03.2010 SE 1000225
(43) Date of publication of application: 16.01.2013
(73) Proprietor: Phoenix Biopower AB, 114 28 Stockholm (SE)
(72) Inventor: HANSSON, Hans-Erik, S-612 02 Finspång (SE)
(74) Representative: Ehrner & Delmar Patentbyrå AB
(86) International application number: PCT/SE2011/050268
(87) International publication number: WO 2011/112146

(56) References cited:
- EP-A1- 0 453 059
- WO-A2-2009/034285
- US-A- 4 101 294
- US-A- 5 388 395
- US-A- 6 148 602

## Description

### FIELD OF THE INVENTION

This invention concerns a gas turbine power generation plant including a solid fuel gasifier for the production of a fuel gas stream, a fuel gas treatment arrangement including at least one fuel gas treatment device, a combustor for receiving the fuel gas stream and for the production of a flue gas stream, a gas turbine unit having an inlet for said flue gas stream and being mechanically coupled to an electric generator for the extraction of useful work, the plant also including a compressor unit for the supply of oxygen to the combustor. The invention also concerns a method for operating such a gas turbine power generation plant.

### BACKGROUND OF THE INVENTION

Such a gas turbine power generation plant is previously known, wherein a raw fuel together with air is passed on to a gasifier. The solid raw fuel is gasified following part combustion thereof for the production of a hot fuel gas stream. Fuel gases in the fuel gas stream are cleaned-up, for environmental reasons and also to protect exposed turbine items for contaminated hot gas, before being passed on to a combustor. The combustor is also supplied with compressed air for combustion from an air compressor. The compressor is mechanically coupled to a gas turbine receiving a flue gas stream produced in the combustor, said gas turbine further being mechanically coupled to an electric generator.

In background art gas turbine power generation plants, heat in the flue gases downstream of the gas turbine is recovered by heat exchange in a steam generator, which supplies steam to an independent steam turbine, which in turn is mechanically coupled to a second electric generator. It is also possible to recover heat from the hot fuel gases in a second steam generator, at the same time providing cooling of the fuel gases before fuel gas is passed on to clean-up. Steam emanating from the second steam generator is typically also passed on to said steam turbine. This is called a Gas Turbine Integrated Gasification Combined Cycle (IGCC). In this cycle, the steam turbine is thus used to recover heat from the fuel gas exiting from the gasifier. One problem with this is, however, that recovered heat is transformed with a very low efficiency in comparison to the complete plant, in the region of 30% of heat that is captured from the fuel gas stream, while fuel gas entering into the combustor has an efficiency of 50-55 % of heat captured from the fuel gas stream.

Such background art plants are also complicated in that they make use of dual power extraction devices. A steam cycle by itself is a complex cycle and requires up to three separate pressure steam systems for enhancing efficiency up to a desired level. Hereby these plants require high investments and high operating and maintenance costs in addition to reduced efficiency.

A classical method of getting electricity from solid fuels is to burn the fuels in a boiler for producing steam supplied to a steam turbine. The turbine in turn drives an electric generator.

IGCC is considered to be more competitive than such steam turbine plants. IGCC affords better efficiency and lower costs. There is also a possibility in an IGCC plant to include the production of hydrogen, which is considered to have the potential of being an advantageous energy carrier. A general drawback is that steam turbine cycles must work at much lower temperatures due to the indirect firing, using large heat exchangers to transform heat from flue gases to steam working media which substantially reduces efficiency.

In present IGCC concepts, especially for coal fired applications, the gasifiers are run with oxygen, often called oxygen blown gasifiers, typically delivering a fuel gas with about 30 % hydrogen (H₂) and 50 % carbon monoxide (CO) and small amounts of hyrocarbons (CH₄). The rest of the gas contents is carbon dioxide (CO₂), small amounts of nitrogen (N₂), argon (A) and water (H₂O).

In case of air blown gasifiers, which also is a common concept, H₂ and CO concentrations are lower due to Nitrogen (N₂) contents in the produced fuel gas.

In some IGCC applications, carbon monoxide is shifted into hydrogen H₂, creating a hydrogen rich fuel.

In such IGCC applications, it is common that CO₂ is separated prior to the combustor inlet, which is called pre combustion carbon capture.

As background art could also be mentioned US 5388 395, wherein a heat recovery steam generator is connected to a separate steam turbine and US 6148 602, wherein heat recovered from the flue gases is used for external purposes.

EP 0 453 059 A1 discloses a power generation system which comprises a primary combustor for effecting a high temperature combustion of coal fuel under a reducing condition by compressed air or oxygen, and a secondary combustor for effecting complete combustion of the resulting product gas of said primary combustor. The secondary combustor is supplied with the primary combustor product gas, air or oxygen for realizing the complete burning of the primary combustor product gas and an additive gas for controlling the combustion gas temperature in said secondary combustor, consisting either of steam or of carbon dioxide.

### AIM AND MOST IMPORTANT FEATURES OF THE INVENTION

It is an aim of the present invention to provide a plant and a method according to the above wherein the drawbacks of the background art are addressed and at least reduced.

This aim is obtained by a plant as claimed in the independent claim 1 and by a method as claimed in the independent claim 3, where the plant comprises, inter alia, a steam generator arranged for heat recovery in the flue gas stream downstream of the turbine unit, and a condenser positioned for water recovery in the flue gas stream, said condenser having a connection for water supply to the steam generator, and where the steam generator is connected to the fuel gas treatment device for the supply of steam for the treatment of the fuel gas stream, wherein it is arranged that steam supplied to the fuel gas treatment device and used for treatment of the fuel gas stream is subsequently transmitted, and thereby indirectly supplied, to the combustor for contributing as process gas.

The invention combines so called wet gas turbine technology with gasification technology. Gasification is used for raw solid fuels like: biomass, peat, lignite and coal. Also waste materials can be used as raw fuel for gasification.

The Wet Cycle Turbine Technology, is the basis for the present invention being an Integrated Gasification Wet Cycle (IGWC) which in an advantageous way integrates gas turbine power production having steam as main process medium with the production of fuel gases from solid raw fuel, whereby, surprisingly, the result benefits from advantageous combinatory effects.

The gasification process requires high temperature. For hard coal fuel, gas temperature at the outlet is in the region of 1500 °C. For biomass and peat, gas temperature at the outlet is around 1000 °C.

Consumed heat in the gasifier is typically in the region of 20 % of total raw fuel low heat value (LHV).

Through the present invention it is achieved, by the use of the process steam, to capture the heat that is consumed in the gasifier and transport it to the combustor. This results in a more effective process and thus more economic and efficient use of the fuel for production of electricity. Steam contributes in the process in as great extent as possible such that the amount of supplied air can be restricted to what is necessary for achieving a complete combustion. Near stoichiometric conditions are thereby aimed at.

One reason why the fuel gas has to be cooled is the treatment/cleaning process. For some cleaning devices it is required to cool the fuel gas from 1000 - 1500 °C as far down as even below 100 °C. The reason for that is that certain cleaning processes can not withstand higher temperatures.

It is advantageous that the steam generator is connected to the fuel gas treatment device for the supply of steam for treatment of the fuel gas stream. The steam which is extracted from the flue gases and is at a relatively low temperature level is hereby advantageously heated from said low level through heat exchange with (or injection into) the much hotter fuel gases after the gasifier. At the same time cooling of the fuel gases is accomplished through the steam.

To be noted is that combustion of hydrogen (H₂) needs less amount of air available in the combustion, which is an advantage for this aspect of the invention. Lowering the amount of air compared to power output enhances efficiency relative to cycles that have air as working media alone. In all, increased steam content in the combustion process enhances efficiency.

Transport of heat generated in the gasifier to the combustor increase efficiency by about 10 % compared to the background art and in case of conversion of the fuel gas into hydrogen, another 3 % gain can be achieved. This is an important issue not only for cost of fuel, but also for the costs of the plant, since major plant costs are related to fuel production facilities which leads to reduction of costs, according to the invention.

Through the fact that the plant includes connections for subsequently transmitting at least part of the steam supplied and used for treatment of the fuel gas stream to the combustor, obtained increased temperatures in the steam will result in more stable combustion.

When the compressor unit is coupled for the supply of combustion air also to the gasifier and high pressure compressed air is directly lead to the gasifier from the compressor, high temperatures will occur in the gasifier inlet because of high pressure compressed air. This is advantageous and reduces heat consumption in the gasifier. Increased inlet air temperature thus results in that a smaller amount of air is required to reach wanted temperature levels for driving the gasifier process.

The term "further treatment" is basically used for treatment other that treatment in heat exchangers.

When the fuel gas treatment device includes a fuel gas conversion device, it is preferred that the fuel gas conversion device is a hydrogen production device coupled to supply hydrogen as main fuel to the combustor. When the fuel gas treatment device includes a steam injector and a fuel gas cleaning device, the steam injector is advantageously positioned in or upstream of the fuel gas cleaning device to protect the cleaning device from high temperature exposure.

The plant includes advantageously an air inlet to the compressor whereby supply of oxygen to the combustor is through supply of compressed combustion air. Preferably the gas turbine unit is hereby mechanically coupled to the compressor unit.

In order to supplement steam as process gas, under certain conditions it is advantageous to arrange for a flue gas recirculation conduit to be connected upstream of or to the combustor. In particular, when a source supplies (essentially) pure oxygen to the combustor, the resulting flue gases will essentially be comprised of carbon dioxide and steam. In such cases, and possibly also under other conditions, it may be beneficial to recycle the flue gases as additions as process gases.

During the process of cooling fuel gases down to as low as to about 100 °C, the fuel gas will run through condensation, and the fuel gas cooling process may include both convection and condensation. If the fuel gas is not quenched by water, a first cooling section may be by transforming of sensitive heat at the initial phase while the cooling at lower temperature heat transfer may be of both condensing and convective. One way to recover condensing heat is to arrange for humidification of treated fuel gas before the gas is mixed or takes part of in a further convective reheating process. If the fuel gas is quenched at the outlet of the gasifier, the whole cooling/reheating process will be one of both condensing and humidifying.

It is thus important according to the invention to "transport" energy generated as heat in the gasifier to the combustion device. Since the fuel gas often has to be cooled to such low temperature levels as is indicated above, the fuel gas stream is advantageously preferred reheated after further treatment in order for making it capable of working as energy carrier. The reheating of the fuel gases subsequent to their passage through the fuel gas treatment device is by using steam heated (generated) through heat exchange with said flue gases and/or by heat exchange with the hot fuel gas stream exiting the gasifier.

In order to shift or convert the fuel gas into hydrogen (H₂), hot fuel gas from the gasifier is often exposed to water scrubbing/quenching whereby the fuel gas is heavy saturated with water vapor. Thereupon the fuel gas is slightly heated and fed into a conversion reactor, which uses a sulphur-tolerant catalyst. Inside the conversion reactor, H₂ is formed together with CO₂ from H₂O and CO in a per se known manner. The conversion can be made in one or two steps, and the total efficiency will be higher if two stages are used.

After the conversion, the fuel gas is cooled and water condensed out from the gas. The cooled fuel gas is optionally led to a scrubbing device, wherein sulphur components are removed, also CO₂ can be revoved in this scrubbing process through a per se known method.

Sulphur and amine contents in the fuel gases would be detrimental to hot turbine items when exposed to the fuel gas, and consequently sulphur removal is very important for this concept whereas CO₂ removal is optional.

Normally, and highly preferred according to background art, compressor work is reduced through an intercooler. By having high pressures such as over 50 bar, the temperature after the compressor will be very high, when intercooler is not used. Having a compressor without an intercooler gives, however, important advantages in connection with gasification and combustion.

In respect of where smaller amounts of air is necessary since steam is used as process gas or work medium, advantageously, this is considered to compensate for the work load afforded by the compressor for compressing at high temperatures. This means that an intercooler can be dispensed of without particularly negative effects on plant efficiency.

Corresponding advantages are achieved in respect of an inventive method of operating a power plant.

### BRIEF DESCRIPTION OF DRAWINGS

The invention will now be described in greater detail at the background of embodiments and with reference to the drawings, wherein:

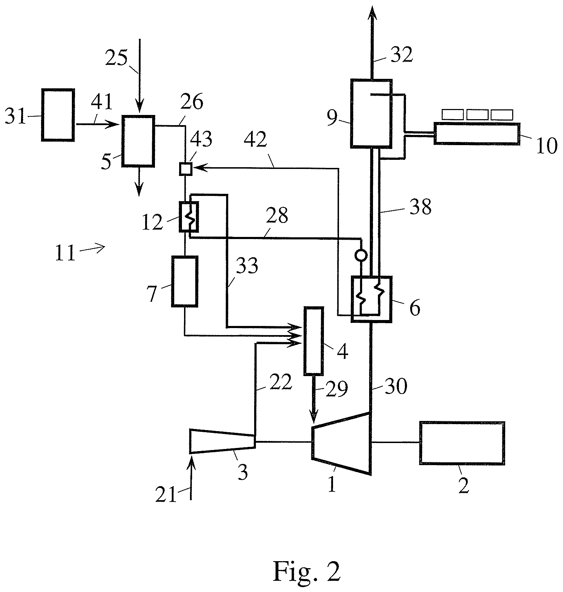

Fig. 2 shows an embodiment of the gas turbine power generation plant according to the invention and a structure of a gas turbine power generation plant,
Figs. 1, 3, 4 and 5 show examples of a gas turbine power generation plant not covered by the claims and useful for understanding the invention, and
Figs. 6 - 7 show different arrangements for fuel gas treatment not covered by the claims and useful for understanding the invention.

### DESCRIPTION OF EMBODIMENTS

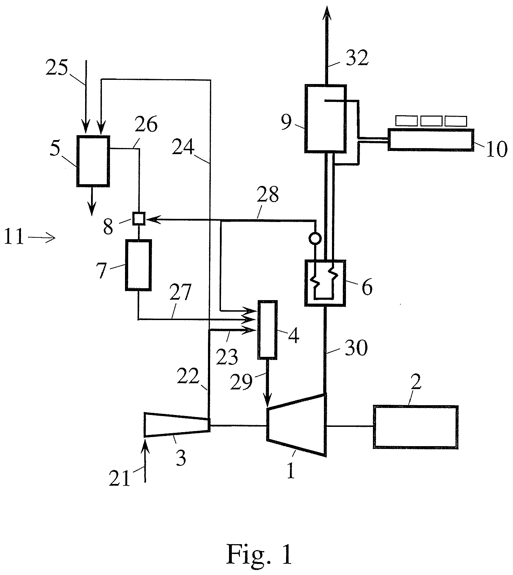

Fig. 1 shows diagrammatically a first example of a gas turbine power generation plant, wherein a turbine unit 1 is mechanically coupled to an electric generator 2 for generation of electric energy. The gas turbine unit 1 is also mechanically coupled to a compressor unit 3, which has an air inlet 21 and an outlet, where a combustion air stream is supplied through a conduit 22, on the one hand directly over a conduit 23 to a combustor 4 and, on the other hand, over a conduit 24 to a gasifier 5.

The gasifier 5 receives solid raw fuel over a raw fuel inlet conduit 25, said fuel for example being biological mass such as peat, wood or energy crop, but also different qualities of fossil fuel such as lignite and coal. Typically, the gasifier is pressurised to about 60 - 70 bar.

Inside the gasifier 5, a fraction of the solid raw fuel is combusted with oxygen provided in the combustion air stream in conduit 24 in order to create a sufficiently high temperature for producing a hot fuel gas stream in the gasifier 5. The hot gas stream is, through a conduit 26, passed on to a fuel gas treatment arrangement 11 including a fuel gas treatment device 7, which in the example in Fig. 1 is a fuel gas clean-up device, wherein i.a. unwanted impurities are removed from the gas stream.

Before the inlet to the treatment device 7, the fuel gas stream is mixed with steam in a mixing device 8 to bring temperature down to levels which are manageable by the treatment device 7. The mixing device 8 also being part of the fuel gas treatment arrangement 11.

The steam is produced in a steam generator 6 which produces steam through heat exchange with a flue gas stream, flowing in a conduit 30, downstream of the turbine unit 1 and led through a conduit 28, to the mixing device 8.

After fuel gas clean-up in the treatment device 7, which for example can be achieved through various filtering steps, or other per se known steps for removal of unwanted gaseous components in the fuel gas stream, the cleaned gas is, along with the steam entering from a conduit, led through a conduit 27 to the combustor 4. Here it is combusted together with oxygen supplied in the combustion air stream so as to produce a flue gas stream, which is passed on through a conduit 29 to the turbine unit 1 for expansion and for conversion into rotational energy.

Inside the combustor 4 the amounts of combustion air delivered into the combustor 4 are held at a level resulting in near stoichiometric conditions. In order to achieve this, steam is entered into the combustor 4 also directly from the steam generator 6. This gives the result that the compressor unit essentially will perform only so much compressor work that is necessary in order to have complete combustion of the fuel in the combustor, together with, of course, provision of compressed air to the gasifier 5.

Further, downstream of the steam generator 6, there is a condenser 9 for flue gas stream water recovery, before the cooled exhaust gases are passed-on to an exhaust conduit 32. The condenser 9 also recovers part of remaining heat in the flue gas stream downstream of the steam generators 6 and passes on feed water to the steam generator 6. There is also shown an optional air cooling device 10 coupled to the condenser 9 in Fig.1.

Fig. 1 illustrates a typical bio fuel plant where typically the temperature in conduit 26 is normally at least 1000 °C. Directly downstream of the mixing device 8 the temperature is reduced to, as an example, 500 °C, which in this case is a tolerable temperature for a filter inside the treatment device being a ceramic filter.

An embodiment of the invention is shown in Fig. 2 which instead of having air supply to the gasifier 5 from the compressor unit 3 is provided with a separate oxygen supply 31, which delivers oxygen over the conduit 41 to the gasifier.

Delivered oxygen is such that the oxygen portion is higher than in ambient air, even 100% oxygen in the delivered gas is of course possible. The gasifier can be reduced in size by supplying concentrated oxygen (O₂). This is because having air as medium requires larger gasifier volumes since the oxygen contents in the air is only about 20%. One further advantage with this is that smaller amounts of nitrogen have to be introduced into the process which can further reduce harmful formation of NOx gases and make it possible to introduce even higher portions of steam in the process. It is also possible, and in certain cases advantageous, to recycle flue gases to the combustor in addition to steam.

The risks of the formation of unwanted NOx gases are drastically reduced in a process according to the invention also because of the introduction of high amounts of steam in or upstream of the combustor.

Required compressor work is also reduced.

In this embodiment, the fuel gas treatment arrangement 11 includes: - A heat exchanger 12 is arranged for cooling fuel gases with steam produced in the steam generator 6, said steam being passed on to said heat exchanger 12 over the conduit 28. Steam heated by the fuel gas is passed on to the combustor through conduit 33. - A mixing device 43 for mixing hot water supplied over conduit 42 into the hot fuel gases is arranged directly downstream of the gasifier 5 and upstream of the heat exchanger 12. - A treatment device 7.

In other aspects, the embodiment in Fig. 2 corresponds to the example of Fig. 1.

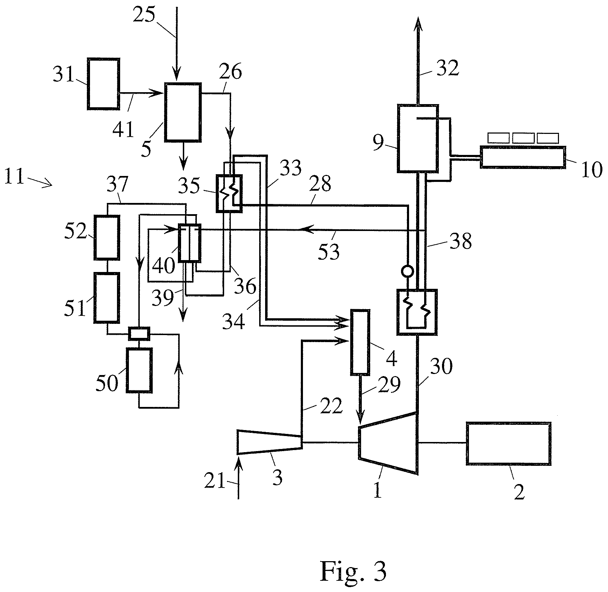

The example of Fig. 3 differs from that of Fig. 1 in that the arrangement 11 for fuel gas treatment is laid out differently. Fuel gas first passes a (dry) fuel gas heat exchanger 35, whereupon it is passed-on through a conduit 36 to a second heat exchange device 40 being a fuel gas reheater device having a primary side (to the right in the Fig.) for an incoming flow of fuel gases from the gasifier at the bottom of the device 40.

A flow of water is let in through a conduit 53 at the top of the primary side of the device 40 and is arranged to support heat exchange between said incoming fuel gas flow at the primary side for cooling the primary side fuel gases. It should be noted that conduit 53 for supplying feed water being connected from a condenser water flow from the flue gas condenser to the heat exchange device 40 fill-up of water in the water flow. Because of the cooling of the primary side fuel gases, water vapor in the fuel gases in the primary side are condensed out along a surface of a wall between the primary side and a secondary side of the second heat exchange device 40 and is transferred into liquid water. The main part of the heat exchange is in this embodiment between the primary side and the secondary side of the second heat exchange device 40 as will be explained below.

A fuel gas exit from the primary side, at the top thereof, connects for further treatment, which in this case is (as seen in the flow direction) a fuel gas shift or conversion device 50, a fuel gas clean-up device including at least a sulphur remover 51 and a CO₂ removal device 52. These devices are examples of devices for further fuel gas treatment. In the conversion device, fuel gas is shifted into hydrogen (H₂), whereupon the shifted fuel gas being H₂ rich or essentially purely being H₂ is led through a fuel gas clean-up device. This arrangement is an embodiment only. Other arrangements are also possible. A preheater is optionally arranged in the fuel gas flow before the conversion device 50.

The second heat exchange device 40 has a secondary side (to the left in the Fig.) for receiving a flow, at its top, of fuel gases coming from the conversion device 50, the clean-up device 51 and the CO₂ removal device 52. The secondary side fuel gases are herein arranged to heat exchange for reheating purposes with the primary side fuel gases through heat passage through the wall separating these sides. Said flow of water coming from the bottom of the primary side is injected at the top of the secondary side for humidifying the fuel gases and contribute to heating the fuel gases by wetting the separating wall. The wall separating the primary side and the secondary side of the second heat exchange device 40 thus becomes wet on both sides from being sprayed or otherwise coated with water. At the primary side it becomes wet because of condensation. This is important in order for the heat exchange between the primary and the secondary sides to be as efficient as required.

The fuel gases that now are relatively warm are passed on from the bottom of said secondary side to the combustor via the heat exchanger 35, where they contribute to cooling the hot fuel gases coming directly from the gasifier at the same time as they are heated before entry to the combustor.

A feed water supply to said water flow is ensured through a conduit 53 from the conduit 38 from the flue gas condenser.

In the fuel gas heat exchanger 35, hot fuel gases coming from the gasifier which, as an example, could reach between 1000 and 1500°C are heat exchanged with steam coming from the steam generator 6 through a conduit 28, said steam typically being of a temperature of about 300°C. Heat exchange is in this case through convection between the two media passing the heat exchanger.

After having passed the shown arrangement 11 for fuel gas treatment, it is also possible to pass on the treated and cleaned-up fuel gases through a conduit to a mixing device (not shown), where it is mixed with steam that has been heated inside the fuel gas heat exchanger 35. Inside a conduit leading to the combustor 4 it is, thus, possible to pass on a mix of overheated steam and cleaned and reheated fuel gas delivered to the combustor 4 for burning together with air emanating from the compressor unit 3. The gas mix is thereby advantageously hot, resulting in advantageous combustion conditions in the combustor.

The gasifier also here has a separate supply of air/oxygen 31. 39 indicates an outlet for possible excess water at the secondary side.

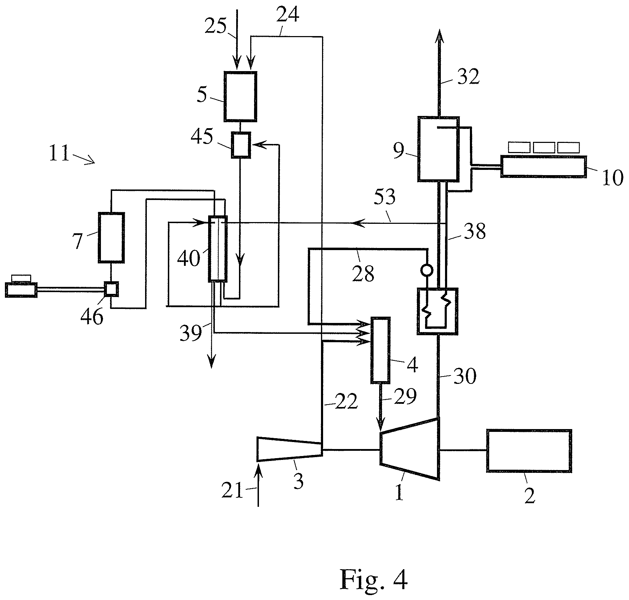

The structure of Fig. 4 has a slightly different configuration also in respect of the fuel gas stream production. Fuel gas is passed from the gasifier 5 to an arrangement 11 for fuel gas treatment:
Through a heat exchange device 40 corresponding to the one in Fig.3. Before entering the heat exchange device 40, the fuel gases coming from the gasifier are passed through a quenching device 45, wherein the fuel gases are cooled, as an example, to about 250 °C and are saturated to 100 % relative humidity. Downstream of the heat exchange device 40, the fuel gases have reached a temperature of, as an example, about 80 °C and are passed on to a fuel gas clean-up device 7 via a cooler 46. The cooler 46 being arranged for creating a driving force in the heat exchange device 40.

Cleaned-up fuel gas is led over the heat exchange device 40 into the combustor 4. In other aspects, this embodiment corresponds to the example in Fig. 1.

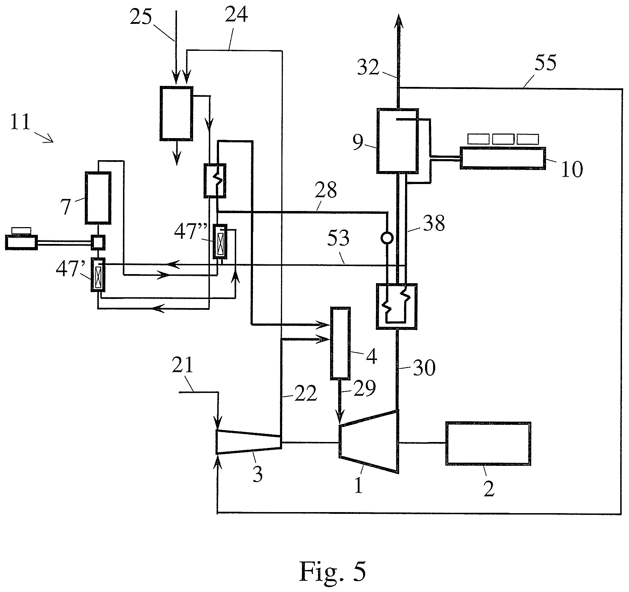

The arrangement for fuel gas treatment 11 in the example in Fig. 5 differs from the one in Fig. 4 essentially in that the heat exchange device 47' and 47" is comprised of two separate parts: 47' being the primary side and 47'' being the secondary side. The heat exchange device 47' and 47" resembles the heat exchange device 40 in Fig. 3, but in this embodiment, all heat exchange is in this heat exchange device 47' and 47'' through the flow of water in a circuit. The water flow is in this case much greater than in respect of the heat exchange device 40 in Fig. 3. One solution for efficient heat exchange is to distribute, spray, coat or pour water over contact surface increasing fill bodies being positioned in the respective parts, whereby the gas flow passes the water coated fill bodies for heat transfer between gas and liquid. An optional flue gas recirculation conduit 55 is arranged to connect the exhaust conduit 32 downstream of the condenser 9 to the compressor unit 3 for optional supply of flue gases as process gas (upstream of the combustor 4). See the discussion of this aspect above.

In other aspects, this embodiment corresponds to the structure in Fig. 4.

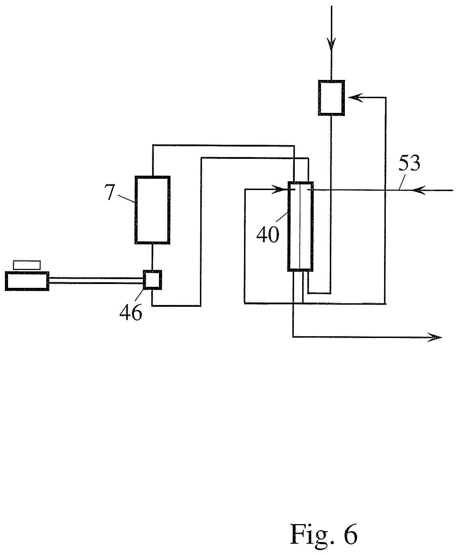

Fig. 6 shows separately an arrangement for fuel gas treatment according an example not covered by the claims. This arrangement is basically according to what is shown in Fig. 3.

It should be noted that the heat exchange device 40 can be inverted in respected of "top" and "bottom" such that supply and discharge of gas and water can be inverted. Supply of fuel gases from the gasifier can be arranged at the top of the primary side and discharge to combustion at the top of the secondary side.

This aspect of the this example concerns an arrangement for fuel gas treatment for use in a gas turbine power generation plant, said plant includes a solid fuel gasifier for the production of a fuel gas stream, a fuel gas treatment device, a combustor for receiving the fuel gas stream and for the production of a flue gas stream and a gas turbine unit for receiving the flue gas stream. The arrangement includes a heat exchange device being comprised of a fuel gas reheater device. The heat exchange device has a primary side for an incoming flow of hot fuel gases from the gasifier. A fuel gas exit from the primary side connects to a device for further fuel gas treatment. The heat exchange device has a secondary side for a flow of further treated fuel gases from the device for further fuel gas treatment. The secondary side treated fuel gases are arranged to heat exchange for reheating purposes with the primary side fuel gases.

In accordance with one aspect, a water circuit is arranged between said primary side and said secondary side and such that the water is arranged to support heat exchange between said primary side and said secondary side and that means are arranged for water coating surfaces inside said primary side (by condensating water vapour) and said secondary side (by distributing, spraying, pouring etc) that are passed by the fuel gases. The fuel gases are humidified in said secondary side and the water vapor in the fuel gases are condensed out in said secondary side, and

The primary and secondary sides are preferably interconnected for heat exchange between these sides such that the flow of treated fuel gases from the treatment device is reheated by the incoming flow of hot fuel gases from the gasifier.

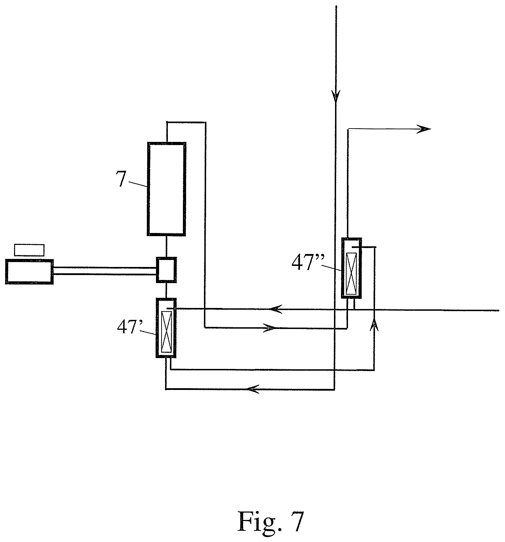

Alternatively, heat exchange is through the water circuit flow. This is illustrated in Fig. 7 which basically is a part of the plant in Fig. 5.

The invention can be modified within the scope of the claims. It is thus possible, for example, to add other functions in the fuel gas treatment device such as sulphur reduction, different kinds of filtering, CO₂ separation, particle separation etc. The invention provides an advantageous integration of previous processes for power generation in one single gas turbine plant.

The inventive process can be said to be an open process being a combined gas turbine and steam turbine process. This is in particular true when, according to one aspect of the invention, hydrogen rich fuel is combusted in air oxygen for forming flue gases almost exclusively including steam and gas components not contributing to the combustions such as nitrogen (N₂) etc. The steam comes partly from the combustion of H₂ in the hydrogen rich fuel, partly from amounts from steam being fed into the combustor directly or indirectly as process gas.

Introduction of steam into the combustor is very advantageous, in particular for combusting fuel with a great amount of H₂ since the flame will be less reactive or "calmer" and thereby more controllable. Thereby the whole process will be more controllable. Steam can also be premixed with H₂ or air before introduction into the combustor. Previous plants for burning hydrogen rich fuels notoriously instable since these fuels act almost explosively in the presents of oxygen in the combustor.

Generally spoken, steam is advantageous in this respect because of its high specific heat capacity.

A further advantageous modification is to provide the compressor gas flow to a primary oven before entering them into the combustor chamber. Obtained increased temperatures in the gas stream from the compressor to the combustor will result in more stable combustion, in particularly when using hydrogen, H₂, as fuel.

## Claims

1. Gas turbine power generation plant including:
- a solid fuel gasifier (5) for the production of a fuel gas stream,
- a fuel gas treatment arrangement (11) including at least one fuel gas treatment device (7),
- a combustor (4) for receiving the fuel gas stream and for the production of a flue gas stream,
- a gas turbine unit (1) having an inlet for said flue gas stream and being mechanically coupled to an electric generator (2) for the extraction of useful work, and
- a compressor unit (3) for the supply of oxygen to the combustor (4),
wherein
- a steam generator (6) is arranged for heat recovery in the flue gas stream downstream of the turbine unit (1),
- a condenser (9) is positioned for water recovery in the flue gas stream, said condenser (9) having a connection for water supply to the steam generator (6),
- the steam generator (6) is fluidly connected to the fuel gas treatment arrangement (11) for the supply of steam for the treatment of the fuel gas stream, wherein it is arranged that steam supplied to the fuel gas treatment arrangement (11) and used for treatment of the fuel gas stream is subsequently transmitted, and thereby indirectly supplied, to the combustor (4) for contributing as process gas,
- the fuel gas treatment arrangement (11) includes a heat exchanger (12) arranged for cooling fuel gases with steam produced in the steam generator (6), the steam being passed on to the heat exchanger (12) over a conduit (28), and steam heated by the fuel gas is passed on to the combustor (4) through a conduit (33), and
- the fuel gas treatment arrangement (11) includes a mixing device (43) for mixing hot water supplied over a conduit (42) connected to the steam generator (6) into the hot fuel gases for cooling purposes, the mixing device (43) being arranged directly downstream of the gasifier (5) and upstream of the heat exchanger (12).

2. Plant according to claim 1, **characterized in that** it includes an air inlet to the compressor, and that supply of oxygen to the combustor is through supply of compressed combustion air.

3. Method for operating a gas turbine power generation plant including:
- a gas turbine unit (1) being mechanically coupled to an electric generator (2), and
- a compressor unit (3) supplying compressed oxygen to the combustor (4),
the method including:
- gasifying a solid fuel for the production of a fuel gas stream,
- treatment of the fuel gases,
- production of a flue gas stream in a combustor (4) which receives the fuel gas stream, and
- supplying said flue gas stream to an inlet of the gas turbine unit (1) and extracting useful work by means of the electric generator (2),
wherein
- recovering heat in the flue gas stream downstream of the turbine unit (1) by a steam generator (6),
- recovering water contents in the flue gas stream by a condenser (9) having a connection for water supply to the steam generator (6),
- supplying steam from the steam generator (6) for the treatment of the fuel gas stream, wherein steam supplied to and used for treatment of the fuel gas stream is subsequently transmitted, and thereby indirectly supplied, to the combustor (4) for contributing as process gas,
- cooling fuel gases with steam by means of a heat exchanger (12), the steam being produced in the steam generator (6) and passed on to the heat exchanger (12) over a conduit (28),
- passing steam heated by the fuel gas on to the combustor (4) through a conduit (33), and
- mixing hot water supplied over a conduit (42) connected to the steam generator (6) into the hot fuel gases for cooling purposes directly downstream of the gasification of the solid fuel and upstream of the heat exchanger (12).

4. Method according to claim 3, **characterized in that** oxygen is supplied to the combustor (4) in the form of compressed air.

## Patentansprüche

1. Gasturbinenkraftwerk, umfassend:
- einen Festbrennstoffvergaser (5) zur Erzeugung eines Brennstoffgasstroms,
- eine Brennstoffgasbehandlungsanordnung (11), die zumindest eine Brennstoffgasbehandlungsvorrichtung (7) umfasst,
- einen Brenner (4) zum Aufnehmen des Brennstoffgasstroms und zur Erzeugung eines Rauchgasstroms,
- eine Gasturbineneinheit (1), die einen Einlass für den Rauchgasstrom aufweist und mit einem elektrischen Generator (2) zur Gewinnung von Nutzarbeit mechanisch gekoppelt ist, und
- eine Verdichtereinheit (3) zur Zufuhr von Sauerstoff zum Brenner (4),
wobei
- ein Dampfgenerator (6) zur Rückgewinnung von Wärme im Rauchgasstrom stromabwärts der Turbineneinheit (1) angeordnet ist,
- ein Kondensator (9) zur Rückgewinnung von Wasser im Rauchgasstrom positioniert ist, wobei der Kondensator (9) einen Anschluss zur Zufuhr von Wasser zum Dampfgenerator (6) aufweist,
- der Dampfgenerator (6) in Fluidverbindung mit der Brennstoffgasbehandlungsanordnung (11) zur Zufuhr von Dampf zur Behandlung des Brennstoffgasstroms steht, wobei er so angeordnet ist, dass Dampf, welcher der Brennstoffgasbehandlungsanordnung (11) zugeführt und zur Behandlung des Brennstoffgasstroms verwendet wird, anschließend zum Brenner (4) übertragen und diesem somit indirekt zugeführt wird, um als Prozessgas zu dienen,
- die Brennstoffgasbehandlungsanordnung (11) einen Wärmetauscher (12) umfasst, der zum Kühlen von Brennstoffgasen mit im Dampfgenerator (6) erzeugtem Dampf angeordnet ist, wobei der Dampf über eine Leitung (28) zum Wärmetauscher (12) weitergeleitet wird und wobei durch das Brennstoffgas erhitzter Dampf durch eine Leitung (33) zum Brenner (4) weitergeleitet wird, und
- die Brennstoffgasbehandlungsanordnung (11) eine Mischvorrichtung (43) zum Einmischen von heißem Wasser, das über eine mit dem Dampfgenerator (6) verbundene Leitung (42) zugeführt wird, in die heißen Brennstoffgase zu Kühlzwecken umfasst, wobei die Mischvorrichtung (43) unmittelbar stromabwärts des Vergasers (5) und stromaufwärts des Wärmetauschers (12) angeordnet ist.

2. Anlage nach Anspruch 1, **dadurch gekennzeichnet, dass** sie einen Lufteinlass zum Verdichter umfasst und dass die Zufuhr von Sauerstoff zum Brenner durch Zufuhr von verdichteter Verbrennungsluft erfolgt.

3. Verfahren zum Betreiben eines Gasturbinenkraftwerks, umfassend:
- eine Gasturbineneinheit (1), die mit einem elektrischen Generator (2) mechanisch gekoppelt ist, und
- eine Verdichtereinheit (3), die dem Brenner (4) verdichteten Sauerstoff zuführt,
wobei das Verfahren Folgendes umfasst:
- Vergasen eines Festbrennstoffs zur Erzeugung eines Brennstoffgasstroms,
- Behandlung der Brennstoffgase,
- Erzeugung eines Rauchgasstroms in einem Brenner (4), der den Brennstoffgasstrom aufnimmt, und
- Zuführen des Rauchgasstroms zu einem Einlass der Gasturbineneinheit (1) und Gewinnen von Nutzarbeit mit Hilfe des elektrischen Generators (2),
wobei
- Rückgewinnen von Wärme im Rauchgasstrom stromabwärts der Turbineneinheit (1) durch einen Dampfgenerator (6),
- Rückgewinnung von Wasseranteilen im Rauchgasstrom durch einen Kondensator (9), der einen Anschluss zur Zufuhr von Wasser zum Dampfgenerator (6) aufweist,
- Zuführen von Dampf vom Dampfgenerator (6) zur Behandlung des Brennstoffgasstroms, wobei zugeführter und zur Behandlung des Brennstoffgasstroms verwendeter Dampf anschließend zum Brenner (4) übertragen und diesem somit indirekt zugeführt wird, um als Prozessgas zu dienen,
- Kühlen von Brennstoffgasen mit Dampf mit Hilfe eines Wärmetauschers (12), wobei der Dampf im Dampfgenerator (6) erzeugt und über eine Leitung (28) zum Wärmetauscher (12) weitergeleitet wird,
- Weiterleiten von durch das Brennstoffgas erhitztem Dampf durch eine Leitung (33) zum Brenner (4) und
- Einmischen von heißem Wasser, das über eine mit dem Dampfgenerator (6) verbundene Leitung (42) zugeführt wird, in die heißen Brennstoffgase zu Kühlzwecken unmittelbar stromabwärts der Vergasung des Festbrennstoffs und stromaufwärts des Wärmetauschers (12).

4. Verfahren nach Anspruch 3, **dadurch gekennzeichnet, dass** dem Brenner (4) Sauerstoff in der Form von verdichteter Luft zugeführt wird.

## Revendications

1. Centrale de production d'énergie à turbine à gaz, incluant :
- un gazéifieur de combustible solide (5) pour la production d'un courant de gaz combustible,
- un agencement de traitement de gaz combustible (11) incluant au moins un dispositif de traitement de gaz combustible (7),
- une chambre de combustion (4) pour recevoir le courant de gaz combustible et pour la production d'un courant de gaz d'évacuation,
- une unité à turbine à gaz (1) ayant une entrée pour ledit courant de gaz d'évacuation et mécaniquement couplée à un générateur électrique (2) pour l'extraction de travail utile, et
- une unité à compresseur (3) pour l'alimentation de la chambre de combustion (4) en oxygène,
dans laquelle
- un générateur de vapeur (6) est agencé pour la récupération de chaleur dans le courant de gaz d'évacuation en aval de l'unité à turbine (1),
- un condenseur (9) est positionné pour la récupération d'eau dans le courant de gaz d'évacuation, ledit condenseur (9) ayant un raccord pour l'alimentation du générateur de vapeur (6) en eau,
- le générateur de vapeur (6) est fluidiquement raccordé à l'agencement de traitement de gaz combustible (11) pour l'alimentation en vapeur pour le traitement du courant de gaz combustible, dans laquelle il est prévu que de la vapeur fournie à l'agencement de traitement de gaz combustible (11) et utilisée pour le traitement du courant de gaz combustible soit par la suite transmise, et ainsi indirectement fournie, à la chambre de combustion (4) pour la contribution en tant que gaz de traitement,
- l'agencement de traitement de gaz combustible (11) inclut un échangeur de chaleur (12) agencé pour refroidir des gaz combustibles avec de la vapeur produite dans le générateur de vapeur (6), la vapeur étant transmise à l'échangeur de chaleur (12) par le biais d'un conduit (28), et la vapeur chauffée par le gaz combustible est transmise à la chambre de combustion (4) par l'intermédiaire d'un conduit (33), et
- l'agencement de traitement de gaz combustible (11) inclut un dispositif de mélange (43) pour mélanger de l'eau chaude fournie par le biais d'un conduit (42) raccordé au générateur de vapeur (6) dans les gaz combustibles chauds dans des buts de refroidissement, le dispositif de mélange (43) étant agencé directement en aval du gazéifieur (5) et en amont de l'échangeur de chaleur (12).

2. Centrale selon la revendication 1, **caractérisée en ce qu'**elle inclut une entrée d'air donnant sur le compresseur, et cette alimentation de la chambre de combustion en oxygène est par l'intermédiaire d'une alimentation en air de combustion comprimé.

3. Procédé pour faire fonctionner une centrale de production d'énergie à turbine à gaz, incluant :
- une unité à turbine à gaz (1) mécaniquement couplée à un générateur électrique (2), et
- une unité à compresseur (3) fournissant de l'oxygène comprimé à la chambre de combustion (4),
le procédé incluant :
- la gazéification d'un combustible solide pour la production d'un courant de gaz combustible,
- le traitement des gaz combustibles,
- la production d'un courant de gaz d'évacuation dans une chambre de combustion (4) qui reçoit le courant de gaz combustible, et
- l'alimentation d'une entrée de l'unité à turbine à gaz (1) en ledit courant de gaz d'évacuation et l'extraction de travail utile au moyen du générateur électrique (2),
dans lequel
- la récupération de chaleur dans le courant de gaz d'évacuation en aval de l'unité à turbine (1) par un générateur de vapeur (6),
- la récupération de teneurs en eau dans le courant de gaz d'évacuation par un condenseur (9) ayant un raccord pour l'alimentation du générateur de vapeur (6) en eau,
- l'alimentation en vapeur à partir du générateur de vapeur (6) pour le traitement du courant de gaz combustible, dans lequel la vapeur fournie au traitement, et utilisée pour ce dernier, du courant de gaz combustible est par la suite transmise, et ainsi indirectement fournie, à la chambre de combustion (4) pour contribuer en tant que gaz de traitement,
- le refroidissement de gaz combustibles avec de la vapeur au moyen d'un échangeur de chaleur (12), la vapeur étant produite dans le générateur de vapeur (6) et transmise à l'échangeur de chaleur (12) par le biais d'un conduit (28),
- la transmission de vapeur chauffée par le gaz combustible à la chambre de combustion (4) par l'intermédiaire d'un conduit (33), et
- le mélange d'eau chaude fournie par le biais d'un conduit (42) raccordé au générateur de vapeur (6) dans les gaz combustibles chauds dans des buts de refroidissement directement en aval de la gazéification du combustible solide et en amont de l'échangeur de chaleur (12).

4. Procédé selon la revendication 3, **caractérisé en ce que** de l'oxygène est fourni à la chambre de combustion (4) sous la forme d'air comprimé.
